# EUROPÄISCHE PATENTSCHRIFT

(11) **EP 0 688 676 B1**
(45) Veröffentlichungstag und Bekanntmachung des Hinweises auf die Patenterteilung: **16.09.1998**
(21) Anmeldenummer: 95108653.7
(22) Anmeldetag: 06.06.1995
(51) Int. Cl.: B41J 31/00, G01D 15/10

(54) **Thermofarbband**
Thermal colour ribbon
Ruban encreur thermique

(30) Priorität: 23.06.1994 DE 4421977
(43) Veröffentlichungstag der Anmeldung: 27.12.1995
(73) Patentinhaber: PELIKAN PRODUKTIONS AG, 8132 Egg (CH)
(72) Erfinder: Krauter, Heinrich, CH-8634 Hombrechtikon (CH)
(74) Vertreter: Hagemann, Heinrich, Dr.rer.nat., Dipl.-Chem.

(56) Entgegenhaltungen:
- DE-A- 3 739 992
- DE-C- 1 222 725
- PATENT ABSTRACTS OF JAPAN, unexamined applications, M Field, Band 12, Nr. 485, 19. Dezember 1988 THE PATENT OFFICE JAPANESE GOVERNMENT Seite 59 M 777; & JP-A-63 205 272 (SONY CHEM CORP)

## Beschreibung

Die Erfindung betrifft ein Thermofarbband, insbesondere Thermocarbonband, mit einem üblichen Träger, einer auf einer Seite des Trägers ausgebildeten Schicht einer Aufschmelzfarbe und gegebenenfalls weiteren Schichten.

Thermofarbbänder sind seit längerem bekannt. Sie weisen auf einem folienartigen Träger, der beispielsweise aus Papier, einem Kunststoff oder dergleichen besteht, eine Aufschmelzfarbe auf, insbesondere in Form einer kunststoff- und/oder wachsgebundenen Farbstoff- oder Rußschicht. Die Aufschmelzfarbe wird bei Thermofarbbändern mittels eines Wärmedruckkopfs geschmolzen und auf ein Aufzeichnungspapier bzw. ein Druckpapier übertragen. Thermische Drucker bzw. Wärmedruckköpfe, die für diesen Vorgang verwendet werden können, sind z.B. aus den DE-B-2 062 494 und 2 406 613 sowie der DE-A-3 224 445 bekannt. Im einzelnen kann dabei wie folgt vorgegangen werden: Auf dem Wärmedruckkopf des Druckers wird ein aus beheizten Punkten bestehender und auf ein Papierblatt aufzudruckender Buchstabe ausgebildet. Der Wärmedruckkopf drückt das Thermofarbband auf das zu beschreibende Papier. Der beheizte Buchstabe des Wärmedruckkopfes einer Temperatur von etwa 400°C führt dazu, daß die Aufschmelzfarbe an der beheizten Stelle aufgeschmolzen und buchstabengetreu auf das Papierblatt übertragen wird. Der benutzte Teil des Thermofarbbandes wird einer Spule zugeführt.

Es gibt auch Thermofarbbänder, bei denen das Wärmesymbol nicht durch einen Wärmedruckkopf, sondern durch Widerstandsbeheizung eines speziell ausgestalteten folienartigen Trägers erfolgt. Die Aufschmelzfarbe, die die eigentliche "Funktionsschicht" beim Druckvorgang ist, enthält die bereits oben geschilderten Materialien. In der Fachwelt spricht man von einem "ETR"-Material ("Electro Thermal Ribbon"). Ein entsprechendes Thermotransfer-Drucksystem wird beispielsweise in der US-A-4 309 117 beschrieben.

Die vorstehend beschriebenen Thermofarbbänder werden im allgemeinen herangezogen, um weiße Blätter und dergleichen zu bedrucken. In Einzelfällen wird es z.B. von Anwendern gewünscht, daß mit einem blauen Thermofarbband gelbes Papier bedruckt wird. Die Kombination Blau/Gelb hat optische Vorteile. Statistische Untersuchen haben gezeigt, daß die beste Lesbarkeit dann erzielt wird, wenn eine blaue Schrift auf einem gelben Hintergrund steht. Die bessere Lesbarkeit drückt sich dadurch aus, daß die Schriftzüge auf dem gelben Hintergrund in den Randbereichen nach einiger Betrachtung kein Flimmern im Auge hervorrufen. Bei anderen Farbkombinationen tritt in dem "Flimmer"-Bereich die Komplementärfarbe auf und verwischt die scharfen Konturen der aufgezeichneten Schriftzüge. Im Zusammenhang mit Thermofarbbändern mit einer Schicht einer blauen Aufschmelzfarbe hat es sich gezeigt, daß die blaue Aufschmelzfarbe, wenn sie auf einen gelben Untergrund gedruckt wird, nicht genügend Deckkraft besitzt, so daß aufgrund subtraktiver Farbmischung das aufgedruckte Symbol mehr oder weniger grün ist. Diese Grünfärbung ist unerwünscht. Ferner stellt sich der bereits angesprochene vorteilhafte Kontrast von Blau auf Gelb nicht ein. Ähnliche Probleme, wie sie oben im Zusammenhang mit der Kombination Blau/Gelb angesprochen wurden, bestehen auch bei anderen Farbkombinationen.

Die nachfolgend erläuterten Druckschriften stellen mehr oder weniger für die noch näher dargestellte vorliegende Erfindung lediglich einen technologischen Hintergrund dar, insbesondere weil sie das oben angesprochene Komplementärfarbsystem Blau/Gelb mit seinen optischen Vorteilen nicht behandeln: Die JP 63-205272 A beschreibt ein Thermofarbband, das auf einem Träger eine übliche Aufschmelzfarbe und darauf eine optisch dichte Schicht einer Aufschmelzfarbe aufweist, die zur Verbesserung der Deckkraft der Aufschmelzfarbe einen pulverförmigen Bestandteil in Form von SiO₂, TiO₂, Fe₃O₄, CaCO₃, BaSO₄, eines metallischen Pulvers (Ni-Pulver oder Cu-Pulver), Al₂O₃, eines Kunststoffpulvers oder dergleichen, enthält. Einen irgendwie gearteten Hinweis auf die angesprochene Kombination Gelb/Blau und deren besondere Bedeutung geht aus dieser Druckschrift nicht hervor. Das gleiche gilt für die DE-A 12 22 725. Diese behandelt ein Übertragungsmaterial für lumineszierende Schriftzeichen mit einem Schichtträger aus Papier oder einer Folie sowie einer darauf angeordneten lumineszierenden (Farb-) Schicht. Über der lumineszierenden Schicht befindet sich eine Lichtstrahlung reflektierende pigmentierte Deckschicht. Durch die Deckschicht wird die lumineszierende (Farb-) Masse durch den Typenschlag nicht mehr unmittelbar vom Übertragungsband auf z.B. einen Briefumschlag übertragen, sondern unter jedes Schriftzeichen wird eine Art Sockel oder Polster aus einem gleichmäßig starken Material angeordnet. Hiermit soll eine gleichmäßige Lesbarkeit der lumineszierenden Schriftzeichen gewährleistet sein. Schwankungen, die durch das Briefumschlagmaterial bedingt waren, sollen ausgeschaltet werden. Die Deckschicht soll vorzugsweise ein Pigment, wie z.B. Titanweiß und/oder Aluminiumdruckschliffpulver, enthalten. Hier steht demzufolge die Deckkraft dieser Schicht im Vordergrund. Die angesprochene Kombination Blau/Gelb mit ihren besonderen Phänomenen geht auch hieraus nicht hervor. Die EP 0 063 000 A2 befaßt sich mit einer Tinte für ein Wärmeübertragungsmaterial, die neben Beschichtungsbestandteilen ein Lösungsmittel enthält, das verdampft werden kann, um eine Beschichtung zu erhalten. Die Beschichtungsmaterialien enthalten einen in dem Lösungsmittel gelösten hitzeübertragbaren Farbstoff. Des weiteren ist in dem Lösungsmittel ein teilchenförmiges unlösliches Material eines Schmelzpunktes von 120°C und mehr dispergiert. Ein zusätzlicher Bestandteil ist ein niedrig schmelzendes Material, das zwischen 40 und 100°C schmilzt. Bevorzugt werden als teilchenförmiges Material Metalloxide, Metalle oder organische Harze oder insbesondere Ruß eingesetzt. Aluminium, Kupfer, Kobalt und andere Metalle können ebenfalls eingesetzt werden. Dieses teilchenförmige Material dient insbesondere als Füllstoff. Über den geschilderten Stand der Technik geht derjenige nach der DE 33 04 584 C2 nicht heraus. Die Druckschrift beschreibt ein wärmeempfindliches Übertragungsmaterial mit Besonderheiten, die in keinem relevanten Zusammenhang zu der oben dargestellten Besonderheit der Kombination Blau/Gelb stehen. Des weiteren ist aus der DE 37 39 992 A1 ein Thermoübertragungsmaterial zum Übertragen von Zweifarbenbildern von einem einzigen Thermoübertragungsmaterial auf ein Aufzeichnungsmaterial, wie z.B. Normalpapier, bekannt. Das bekannte Thermoübertragungsmaterial enthält zwei Tintenschichten, wovon die erste eine gelbe Farbe aufweist. Das zweifarbige Aufzeichnungsbild entsteht durch selektive Übertragung der zweiten Tintenschicht allein oder der ersten und zweiten Tintenschicht zusammen. Durch das niedrige Deckvermögen der gelben Tintenschicht wird beim Übertragen beider Tintenschichten auf das Aufzeichnungsmaterial ein klarer Farbton erhalten. Die vorstehend geschilderte Problematik der Farbkombination Blau/Gelb ist auch in dieser Druckschrift nicht erwähnt.

Der Erfindung lag daher die Aufgabe zugrunde, das eingangs beschriebene Thermofarbband so weiterzubilden, daß im Falle des Aufdruckens einer blauen Aufschmelzfarbe auf einen gelben Untergrund bzw. Papier ein optisch ungestörter Aufdruck möglich wird.

Erfindungsgemäß wir diese Aufgabe dadurch gelöst, daß sich auf einer Schicht einer blauen Aufschmelzfarbe A) eine optisch dichte Schicht einer feinteiliges Aluminium enthaltenden Aufschmelzfarbe B) befindet.

Die im Rahmen der Erfindung ausgebildeten Aufschmelzfarben können wie üblich wachs- oder kunststoffgebunden sein. Hierzu sei beispielsweise auf die EP 0 206 036 verwiesen.

Von besonderem Wert ist die vorliegende Erfindung, wenn im Falle einer blauen Aufschmelzfarbe A) auf einen gelben Untergrund bzw. gelbes Papier übertragen wird. Der Begriff "Blau" soll im Rahmen einer Erfindung nicht zu eng verstanden werden und nicht unbedingt durch den Wellenlängenbereich von 440 bis 485 nm festgelegt sein. Vielmehr kann dieser Bereich mehr oder weniger weit nach unten und oben überschritten werden, sofern der Blauton vorherrscht. Zur blauen bzw. gelben Einfärbung der Aufschmelzfarbe eignen sich verschiedene Farbmittel in Form von insbesondere organischen Farbpigmenten und Fettfarbstoffen, insbesondere in Form der nachfolgend mit ihrem C. I. bezeichneten blauen Farbmittel Pigment blue 1, 7, 16, 56, 60, 61, 15:1, 15:2, 15:3, 15:4, 15:6, 56:1 und 61:1 bzw. in Form von Solvent Blue 79, Solvent Blue 36 und Solvent Blue 63 sowie gelben Farbmittel Pigment Yellow 1, 3, 13, 73, 74, 81, 83, 97, 120, 126, 151, 154 und 175, Solvent Yellow 2, Solvent Yellow 36 und Solvent Yellow 29.

Die Stärke der Schicht der Aufschmelzfarbe A) liegt im allgemeinen in der Größenordnung von 0,5 bis 7 µm, wobei der Bereich von 1 bis 3 µm bevorzugt ist.

Im Rahmen der Erfindung ist es möglich, der jeweiligen Aufschmelzfarbe A) nicht nur ein einziges Farbmittel einzuverleiben, sondern zusätzlich noch ein nuancierendes Farbmittel. Handelt es sich beispielsweise um eine blaue Aufschmelzfarbe, dann lassen sich dieser beispielsweise ein oder mehrere der gelben oder auch roten Farbmittel, insbesondere in Form der roten organischen Farbpigmente Pigment Red 2, 149, 169, 170, 179, 187, 48:1, 48:2, 48:4, 49:1, 52:1, 53:1 und 57:1 einverleiben, wie insbesondere das sogenannte "Permanent-gelb (Diaryl-Farbstoff) und Permanent-Rubin (Naphthol-Farbstoff)". Im Falle der blauen Aufschmelzfarbe ist es entscheidend, daß durch den angesprochenen unerwünschten subtraktiven Effekt beim Aufdruck auf einen gelben Untergrund kein Grünstich entsteht. Demzufolge lassen sich solche Farbmittel zusätzlich einverleiben, die hier nicht stören.

Die Ausbildung der Schicht der Aufschmelzfarbe, insbesondere der blauen Aufschmelzfarbe, erfolgt entsprechend den üblichen Verfahren des Standes der Technik, beispielsweise durch Auftrag mittels einer Rakel aus der schmelze. Entsprechendes gilt auch für die Schicht der Aufschmelzfarbe, die das feinteilige Aluminium enthält.

Die optisch dichte Schicht der Aufschmelzfarbe B), die das feinteilige Aluminium enthält, hat im allgemeinen eine Stärke von 0,5 bis 5 µm, insbesondere 1,0 bis 2,5 µm und ganz besonders zwischen 1,0 bis 1,8 µm. Eine Stärke von mehr als etwa 5 µm würde zu einem unerwünscht hohen Energiebedarf beim Aufschmelzen der Aufschmelzfarbe führen. Hierdurch könnte der gesamte Druckvorgang gestört werden. Eine Schicht einer Stärke von weniger als etwa 0,5 µm läßt sich schwer herstellen, darüber hinaus besteht die Gefahr, daß die gewünschte optische Dichte zur Vermeidung des angesprochenen unerwünschten Grüntons im Zusammenhang mit der Wahl einer blauen Aufschmelzfarbe beim Aufdruck auf einen gelben Untergrund nicht gegeben ist.

Das in der optisch dichten Schicht enthaltene feinteilige Aluminium weist vorzugsweise eine Teilchengröße von 1 bis 10 µm, inbesondere von 3 bis 7 und besonders bevorzugt von 3 bis 5 µm auf. Dabei liegen die Aluminiumteilchen insbesondere in Form von Plättchen der bezeichneten Teilchengröße vor, wobei deren Dicke unterhalb derjenigen der jeweiligen Aufschmelzfarbe liegt und insbesondere etwa 1 bis 3 µm beträgt. Sein Gehalt in der optisch dichten Aufschmelzfarbe liegt vorzugsweise in dem Bereich von 5 bis 25 Gew.-%, insbesondere von 10 bis 15 Gew.-%. Wenn hier von einer "optisch dichten" Schicht gesprochen wird, dann ist hierunter eine optische Dichte zu verstehen, die insbesondere den angesprochenen nachteiligen Effekt der substraktiven Kombination Blau/Gelb zu Grün weitgehend ausschließt. Der Fachmann kann im Rahmen handwerklicher Bemühungen den Anteil des feinteiligen Aluminiums in dieser Schicht so einstellen, daß tatsächlich von einer "optisch dichten" Schicht gesprochen werden kann bzw. hier der unerwünschte Grünstich bzw. Grünton weitgehend zurückgedrängt ist.

Das erfindungsgemäße Thermofarbband löst die gestellte Aufgabe in idealer Weise. So kann z.B. der unerwünschte Grünton bzw. Grünstich beim Ausdrucken einer blauen Aufschmelzfarbe A) auf einen gelben Untergrund, beispielsweise auf gelbes Papier, gelb eingefärbte Kunststoffolien und dergleichen, völlig ausgeschlossen werden. Dabei ist es als überraschend anzusehen, daß dann, wenn das feinteilige Aluminium ohne die erfindungsgemäß vorgesehene Zusatzschicht der blauen Aufschmelzfarbe einverleibt wird, die angesprochene Aufgabe nicht bzw. nicht in dem gewünschten Umfang gelöst wird. So hat es sich in diesem Falle gezeigt, daß nach wie vor die subtraktive Farbmischung vorherrscht und der Ausdruck nicht blau ist, sondern einen starken Grünton aufweist. Ein derartiger Vorschlag wurde bereits in der DE-C-33 04 584 angesprochen. Danach wird der Aufschmelzfarbe ein feinteiliges wärmeleitendes Material einverleibt, um der Aufschmelzfarbe verbesserte Schmelzübertragbarkeit zu vermitteln, wobei das wärmeleitende Material die Transparenz der Farbschicht bewahren soll. Für diesen Zweck werden unter anderem Aluminium, Kupfer, Zinn und Zink angegeben. Das wärmeleitende Material soll in der Aufschmelzfarbe in einer Menge von vorzugsweise 3 bis 30 Gew.-%, bezogen auf das Trockengewicht der Aufschmelzfarbe, vorliegen. Im Rahmen der vorliegenden Erfindung wird mit der feinteiliges Aluminium enthaltenden Aufschmelzfarbe keine Transparanz erhalten. Eine Transparenz würde eine Lösung der gestellten Aufgabe ausschließen. Das bedeutet, daß der vorstehend geschilderte Stand der Technik den Fachmann davon abgehalten hätte, den von der Erfindung eingeschlagenen Weg zu beschreiten.

Die Erfindung soll nachfolgend anhand eines Beispiels noch näher erläutert werden:

### Beispiel:

Es wurde ein Thermofarbband hergestellt, bei dem die Aufschmelzfarbe 10 Gew.-% Ethylen-Vinylacetat-Copolymer (EVA), 30 Gew.-% Esterwachs, 50 Gew.-% Paraffin und 10 Gew.-% blaues Pigment (Pigment Blue 7) enthielt. Der Träger bestand aus einem Polyester einer Folienstärke von 6 µm. Die Aufschmelzfarbe wurde geschmolzen und in üblicher Weise mittels einer Rakel in einer Stärke von 4 µm auf einen Polyesterträger einer Stärke von 6 µm aufgebracht. Anschließend erfolgte mit der gleichen Technologie der Auftrag der optisch dichten Aufschmelzfarbe in einer Stärke von 1,5 µm, die 80 Gew.-% Esterwachs, 5 Gew.-% Mineralöl und 15 Gew.-% Aluminiumplättchen eines Teilchendurchmessers von etwa 7 µm und einer Dicke von etwa 1 µm enthielt. Wurde ein derartig hergestelltes Farbband zum Bedrucken gelben Papiers herangezogen, dann war keinerlei Grüneinfärbung bei den aufgedruckten blauen Symbolen zu erkennen.

## Patentansprüche

1. Thermofarbband, insbesondere Thermocarbonband, mit einem üblichen Träger, einer auf einer Seite des Trägers ausgebildeten Schicht einer Aufschmelzfarbe und gegebenenfalls weiteren Schichten, dadurch gekennzeichnet, daß sich auf einer Schicht einer blauen Aufschmelzfarbe A) eine optisch dichte Schicht einer feinteiliges Aluminium enthaltenden Aufschmelzfarbe B) befindet.

2. Thermofarbband nach Anspruch 1, dadurch gekennzeichnet, daß das feinteilige Aluminium in Form von Plättchen einer Teilchengröße von 1 bis 10 µm vorliegt.

3. Thermofarbband nach Anspruch 1 oder 2, dadurch gekennzeichnet, daß die feinteiliges Aluminium enthaltende Aufschmelzfarbe B) eine Stärke von 0,5 bis 5 µm, insbesondere von 1,0 bis 2,5 µm aufweist.

4. Thermofarbband nach einem der Ansprüche 1 bis 3, dadurch gekennzeichnet, daß die feinteiliges Aluminium enthaltende Aufschmelzfarbe B) 5 bis 25 Gew.-%, insbesondere 10 bis 15 Gew.-% Aluminium enthält.

5. Thermofarbband nach einem der Ansprüche 1 bis 4, dadurch gekennzeichnet, daß die Aufschmelzfarbe A) eine Stärke von 0,5 bis 7 µm, insbesondere von 1 bis 3 µm aufweist.

6. Thermofarbband nach mindestens einem der Ansprüche 1 bis 5, dadurch gekennzeichnet, daß die Aufschmelzfarbe A) Farbmittel in Form von organischen Farbpigmenten und/oder Fettfarbstoffen enthält.

7. Thermofarbband nach mindestens einem der Ansprüche 1 bis 6, dadurch gekennzeichnet, daß die blaue Aufschmelzfarbe A) 5 bis 20 Gew.-% blaues Farbmittel enthält.

8. Verwendung eines Thermofarbbandes, insbesondere Thermocarbonbandes, mit einem üblichen Träger, einer auf einer Seite des Trägers ausgebildeten Schicht einer Aufschmelzfarbe und gegebenenfalls weiteren Schichten, wobei sich auf einer Schicht einer blauen Aufschmelzfarbe A) oder einer gelben Aufschmelzfarbe A) eine optisch dichte Schicht einer feinteiliges Aluminium enthaltenden Aufschmelzfarbe B) befindet,
1) zum Bedrucken gelber Substrate, insbesondere in Form eines gelben Papiers oder einer gelb eingefärbten Kunststoffolie, im Falle einer blauen Aufschmelzfarbe A) sowie
2) zum Bedrucken blauer Substrate, insbesondere in Form eines blauen Papiers oder einer blau eingefärbten Kunststoffolie, im Falle einer gelben Aufschmelzfarbe A).

## Claims

1. A thermal ink ribbon, particularly a thermal carbon ribbon, including a conventional carrier, a layer of a fusible ink formed on one side of the carrier and optionally further layers, characterised in that an optically impervious layer of a fusible ink B) containing fine particulate aluminium is disposed on a layer of a blue fusible ink A).

2. A thermal ink ribbon as claimed in Claim 1, characterised in that the fine particulate aluminium is present in the form of platelets with a particle size of 1 to 10 µm.

3. A thermal ink ribbon as claimed in Claim 1 or 2, characterised in that the fusible ink B) containing fine particulate aluminium has a thickness of 0.5 to 5 µm, particularly 1.0 to 2.5 µm.

4. A thermal ink ribbon as claimed in one of Claims 1 to 3, characterised in that the fusible ink B) containing fine particulate aluminium contains 5 to 25 wt.%, particularly 10 to 15 wt.%, aluminium.

5. A thermal ink ribbon as claimed in one of Claims 1 to 4, characterised in that the fusible ink A) has a thickness of 0.5 to 7 µm, particularly 1 to 3 µm.

6. A thermal ink ribbon as claimed in at least one of Claims 1 to 5, characterised in that the fusible ink A) contains colorant in the form of organic pigments and/or fatty dyes.

7. A thermal ink ribbon as claimed in at least one of Claims 1 to 6, characterised in that the blue fusible ink A) contains 5 to 20 wt.% blue colorant.

8. The use of a thermal ink ribbon, particularly a thermal carbon ribbon, including a conventional carrier, a layer of a fusible ink formed on one side of the carrier and optionally further layers, wherein an optically impervious layer of a fusible ink B) containing fine particulate aluminium is disposed on a layer of a blue fusible ink A) or a yellow fusible ink A),
1) for printing yellow substrates, particularly in the form of yellow paper or a yellow coloured plastics film, in the case of a blue fusible ink B) and
2) for printing blue substrates, particularly in the form of blue paper or a blue coloured plastics film, in the case of a yellow fusible ink B).

## Revendications

1. Ruban encreur thermique, en particulier ruban de thermocarbone, avec un support ordinaire, une couche d'un colorant à fusion formée sur un côté du support et le cas échéant d'autres couches, caractérisé en ce que, sur unecouche d'un colorant à fusion A bleu se trouve une couche très réfringente d'un colorant à fusion B contenant de l'aluminium en fines particules.

2. Ruban encreur thermique selon la revendication 1, caractérisé en ce que l'aluminium en fines particules est présent sous la forme de lamelles d'une taille de particules de 1 à 10 µm.

3. Ruban encreur thermique selon les revendications 1 ou 2, caractérisé en ce que le colorant à fusion B contenant de l'aluminium en fines particules présente une épaisseur de 0,5 à 5 µm, en particulier de 1,0 à 2,5 µm.

4. Ruban encreur thermique selon l'une des revendications 1 à 3, caractérisé en ce que le colorant à fusion B contenant de l'aluminium en fines particules contient 5 à 25 % en poids, en particulier 10 à 15 % en poids d'aluminium.

5. Ruban encreur thermique selon l'une des revendications 1 à 4, caractérisé en ce que le colorant à fusion A présente une épaisseur de 0,5 à 7 µm, en particulier de 1 à 3 µm.

6. Ruban encreur thermique selon au moins une des revendications 1 à 5, caractérisé en ce que le colorant à fusion A contient des colorants sous la forme de pigments colorés organiques et/ou de colorants pour graisses.

7. Ruban encreur thermique selon au moins une des revendications 1 à 6, caractérisé en ce que le colorant à fusion A bleu contient 5 à 20 % en poids d'un colorant bleu.

8. Utilisation d'un ruban encreur thermique en particulier ruban de thermocarbone, avec un support ordinaire, une couche d'un colorant à fusion formée sur un côté du support et le cas échéant d'autres couches, caractérisé en ce que, sur une couche d'un colorant à fusion A bleu ou d'un colorant à fusion A jaune se trouve une couche très réfringente d'un colorant à fusion B contenant de l'aluminium en fines particules, 1) pour l'impression de substrats jaunes, en particulier sous la forme d'un papier jaune ou d'une feuille de matière plastique colorée en jaune, dans le cas d'un colorant à fusion B bleu, et 2) pour l'impression de substrats bleus, en particulier sous la forme d'un papier bleu ou d'une feuille de matière plastique colorée en bleu, dans le cas d'un colorant à fusion B jaune.
